(19) **Europäisches Patentamt / European Patent Office / Office européen des brevets**

(11) **EP 2 824 378 B1**

(12) **FASCICULE DE BREVET EUROPEEN**

(45) Date de publication et mention
de la délivrance du brevet:
**05.12.2018 Bulletin 2018/49**

(51) Int Cl.:
***F17C 5/06*** (2006.01)

(21) Numéro de dépôt: **14175724.5**

(22) Date de dépôt: **04.07.2014**

(54) **Procédé de remplissage d'un réservoir de gaz**

Füllverfahren eines Gastanks

Method for filling a gas tank

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2013 FR 1356753**

(43) Date de publication de la demande:
**14.01.2015 Bulletin 2015/03**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• **Ammouri, Fouad**
**91300 Massy (FR)**
• **Damongeot, Loïc**
**94460 Valenton (FR)**

(74) Mandataire: **De Cuenca, Emmanuel Jaime**
**L'Air Liquide S.A.**
**Direction Propriété Intellectuelle**
**75 Quai d'Orsay**
**75321 Paris Cedex 07 (FR)**

(56) Documents cités:
**EP-A1- 0 653 585      WO-A1-2011/133296**
**FR-A1- 2 884 592      FR-A1- 2 920 858**
**FR-A1- 2 978 233      US-A1- 2009 044 877**
**US-B1- 7 647 194**

**Description**

La présente invention concerne procédé de remplissage d'un réservoir composite.

L'invention concerne plus particulièrement un procédé de remplissage d'un réservoir composite de type IV délimité par une paroi de forme générale cylindrique et de dimension connues avec un gaz carburant sous pression, notamment de l'hydrogène gazeux, le gaz étant injecté dans le réservoir via un injecteur de diamètre connu, dans lequel la température $T(t)$ moyenne du gaz dans le réservoir est estimée en temps réel en fonction du temps $t$ au cours du remplissage, le procédé comprenant, avant le remplissage, une étape de détermination de la température initiale $T(0)$ du gaz dans le réservoir, une étape de détermination de la pression initiale $P(0)$ du gaz dans le réservoir, une étape de détermination de la température moyenne initiale de la paroi du réservoir $T_w(0)$ et une étape de détermination de la masse de gaz initiale dans le réservoir $m(0)$, le procédé comprenant, au cours du remplissage, une étape de détermination de l'enthalpie $h_e(t)$ du gaz entrant dans le réservoir en fonction du temps et une étape de détermination de la masse de gaz $m(t)$ introduite dans le réservoir en fonction du temps ou, respectivement, une étape de détermination de la pression $P(t)$ dans le réservoir en fonction du temps, le procédé comprenant une étape de détermination de la température moyenne du gaz $T(t)$ à l'instant $t$ dans le réservoir en degré K.

Le remplissage de réservoirs de gaz à haute pression (tel que de l'hydrogène à une pression comprise entre 300 et 800bar) est soumis à des contraintes antagonistes. En effet, le remplissage de réservoirs de véhicules doit être réalisé dans un temps minimum (quelques minutes) tout en maximisant le taux de remplissage et en limitant le refroidissement du gaz injecté.

La connaissance de la température du gaz dans le réservoir au cours du remplissage est préférable pour éviter un échauffement excessif.

Cependant, dans un modèle de remplissage dit « sans communication », cette température n'est pas mesurée par un capteur de température et doit donc être calculée (estimée).

Un tel procédé de remplissage est connu de WO 2011 133296 A1. Le procédé selon l'invention vise à estimer la température du gaz (hydrogène) dans le réservoir en cours de remplissage à partir de paramètres connus ou plus facilement mesurables. Cette estimation de la température en temps réel permet de réaliser un « capteur logiciel » qui peut être mis en oeuvre dans un logiciel avec une fréquence appropriée, par exemple de l'ordre du hertz (Hz) de façon que le temps de calcul soit compatible avec le procédé de remplissage de réservoirs de véhicules au sein d'une station de remplissage.

Le procédé pourra utiliser notamment les paramètres évoqués dans la norme « SAE » concernant le remplissage des réservoirs d'hydrogène de véhicules.

Ce capteur logiciel peut notamment être utilisé sur les stations de remplissage dans le cas où il n'y a pas de communication dynamique avec le véhicule, c'est-à-dire quand la pression et la température dans le réservoir du véhicule à remplir ne sont pas communiquées à la station de remplissage.

Actuellement la technologie privilégiée consiste à déterminer des rampes d'augmentation de pression dans le réservoir en fonction de la capacité de la station à refroidir le gaz injecté à l'entrée du réservoir. Cependant, ces recommandations imposent un refroidissement exagéré pour être sûr que la température dans le réservoir reste toujours inférieure à la limite réglementaire (85°C).

Ce refroidissement excessif (coûteux) peut être réduit grâce au procédé selon l'invention.

Le procédé selon l'invention peut notamment être mis en oeuvre dans un procédé comprenant une étape préliminaire connue de pré-remplissage dans laquelle un jet de pression est réalisé dans un temps bref (quelques secondes) pour estimer les propriétés du réservoir telles que la masse, la pression et la température du gaz au sein du réservoir avant le remplissage.

Après cette étape préliminaire, une étape suivante peut être constituée du remplissage proprement dit. Au cours de celle-ci, l'évolution de la température du gaz dans le réservoir est estimée en temps réel pour en déduire la masse (ou la pression) et donc la masse volumique du gaz à chaque instant. Ce procédé, associé à une stratégie de contrôle du remplissage permet d'arrêter le remplissage sur un critère de masse, de masse volumique ou de pression finale à atteindre.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que cette température moyenne $T(t)$ est exprimée comme une fonction du premier degré de la température moyenne du gaz $T(t-1)$ à l'instant précédent $(t-1)$ et d'un coefficient d'échange chaleur $k_g(t-1)$ convectif entre le gaz et la paroi interne du réservoir à l'instant $(t-1)$ en $W.m^{-2}.K^{-1}$, dans lequel le coefficient d'échange chaleur $k_g(t-1)$ est donné par la relation $k_g=(\lambda g/Dint).Nuint$ dans laquelle $\lambda g$ est la conductivité thermique du gaz dans le réservoir en $W.m^{-1}.K^{-1}$, Dint est le diamètre interne du réservoir en mètre et Nuint le nombre de Nusselt du gaz dans le réservoir (sans dimension), et dans lequel le nombre de Nusselt du gaz est exprimé en fonction du nombre de Reynolds (Red) (sans dimension) relatif à la convection forcée dans le réservoir et du nombre de Rayleigh (Radint) (sans dimension) relatif à la convection naturelle interne dans le réservoir selon une formule $Nuint= a.Radint^b + c.Red^{d-}$

dans laquelle a est un coefficient sans dimension fonction du rapport (Lint/Dint) entre la longueur interne du réservoir Lint en mètre et le diamètre interne du réservoir Dint en mètre, c étant un coefficient sans dimension fonction du rapport (Dint/di) entre le diamètre interne du réservoir Dint en mètre et le diamètre de l'injecteur di en mètre, a, b, c et d étant des nombres réels positifs sans dimension, a étant compris entre 0 et 0,2, b étant compris entre 0,2 et 0,5, c étant compris entre 0 et 0,3 et d étant compris entre 0.5 et 0.9.

Par ailleurs, des modes de réalisation de l'invention peuvent comporter l'une ou plusieurs des caractéristiques suivantes :

- le coefficient a sans dimension fonction du rapport (Lint/Dint) est donné par la formule :
  a= a1 * exp(a2*($L_{int}$/$D_{int}$)) dans laquelle « exp » signifie la fonction exponentielle, avec a1 compris entre 0 et 0,04 et a2 compris entre 0,1 et 0,3

    - le coefficient c sans dimension fonction du rapport (Dint/di) est donné par la formule : c = c1 * exp(c2 * (Dint/d)) dans laquelle « exp » signifie la fonction exponentielle, c1 étant compris entre 0 et 0,05 et c2 étant compris entre 0,5 et 3,
    - la paroi du réservoir composite comprend un liner plastique et une couche de matériau composite et est assimilée à une paroi homogène pour modéliser sa température ($T_w$), c'est-à-dire que la capacité calorifique et la masse de la paroi sont les moyennes de celles des deux constituants de la paroi que sont le liner et la couche de composite,
    - la température moyenne du gaz T(t) est déterminée en temps réel par la résolution numérique de deux bilans enthalpiques : un premier bilan enthalpique appliqué au gaz injecté dans le réservoir et un second bilan enthalpique appliqué à la paroi du réservoir, en utilisant l'équation d'état des gaz réels appliquée au gaz dans le réservoir, les propriétés thermophysiques du gaz tel que le facteur de compressibilité Z, la capacité thermique massique cp et l'enthalpie massique h du gaz étant connues,
    - la masse de gaz dans le réservoir est déterminée en temps réel par la résolution numérique de deux bilans enthalpiques : un premier bilan enthalpique appliqué au gaz injecté dans le réservoir et un second bilan enthalpique appliqué à la paroi du réservoir, en utilisant l'équation d'état des gaz réels appliquée au gaz dans le réservoir, les propriétés thermophysiques du gaz tel que le facteur de compressibilité Z, la capacité thermique massique cp et l'enthalpie massique h du gaz étant connues,
    - la pression moyenne du gaz P(t) dans le réservoir est déterminée en temps réel par la résolution numérique de deux bilans enthalpiques : un premier bilan enthalpique appliqué au gaz injecté dans le réservoir et un second bilan enthalpique appliqué à la paroi du réservoir, en utilisant l'équation d'état des gaz réels appliquée au gaz dans le réservoir, les propriétés thermophysiques du gaz tel que le facteur de compressibilité Z, la capacité thermique massique $c_p$ et l'enthalpie massique h du gaz étant connues,
    - la température moyenne de la paroi du réservoir Tw(t) est déterminée en temps réel par la résolution numérique de deux bilans enthalpiques : un premier bilan enthalpique appliqué au gaz injecté dans le réservoir et un second bilan enthalpique appliqué à la paroi du réservoir, en utilisant l'équation d'état des gaz réels appliquée au gaz dans le réservoir, les propriétés thermophysiques du gaz tel que le facteur de compressibilité Z, la capacité thermique massique Cp et l'enthalpie massique h du gaz étant connues,
    - le réservoir a un rapport (Lint/Dint) entre la longueur interne du réservoir Lint en mètre et le diamètre interne du réservoir Dint en mètre compris entre 1,5 et 7 et de préférence compris entre 1,8 et 6,6,
    - le rapport (Dint/di) entre le diamètre interne du réservoir Dint en mètre et le diamètre di de l'injecteur (2) en mètre est compris entre 30 et 80 et de préférence compris entre 35,0 et 72,3,
    - le nombre de Reynolds (Red) (sans dimension) relatif à la convection forcée dans le réservoir est compris entre $5,6.10^4$ et $2,0.10^6$,
    - le nombre de Rayleigh (Radint) (sans dimension) relatif à la convection naturelle interne dans le réservoir est compris entre $8,0.10^8$ et $1,0.10^{12}$.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :

- la figure 1 représente une vue schématique et partielle illustrant un exemple de station de remplissage pouvant mettre en oeuvre le procédé selon l'invention,
- les figures 2 et 3 représentent des vues schématiques et partielles illustrant respectivement deux exemples de fonctionnement possibles du procédé selon l'invention.

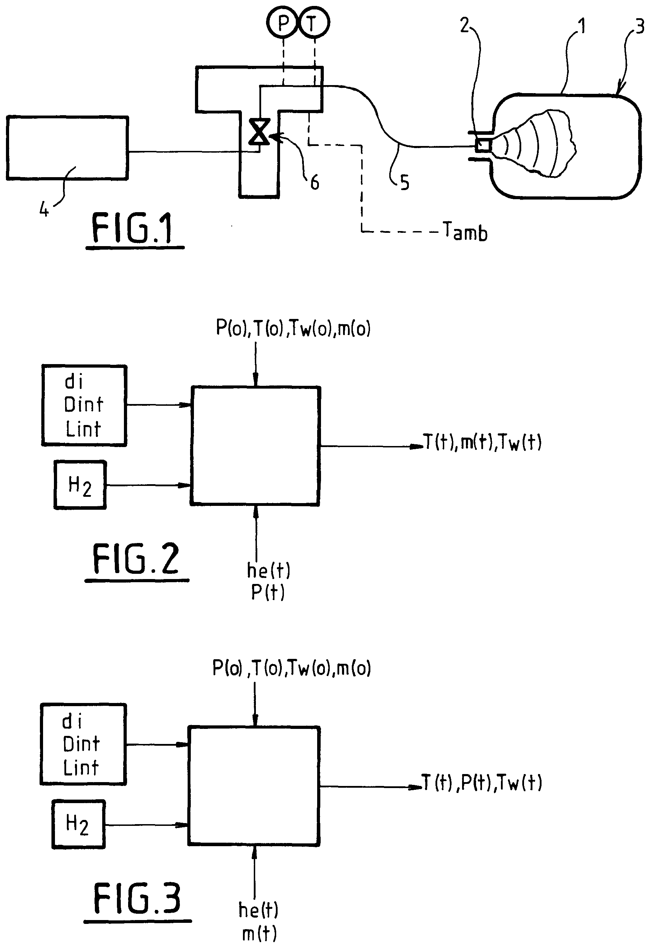

La station de remplissage illustrée schématiquement et partiellement à la figure 1 comprend un injecteur 2 situé à l'extrémité d'un flexible 5 destiné à être raccordé à l'orifice d'un réservoir 1 à remplir. Le flexible 5 est relié via au moins un système de vanne 6 à une source 4 de gaz sous pression.

Le procédé utilise de préférence une modélisation des phénomènes thermiques macroscopiques qui interviennent au sein du système comprenant le flexible 5, le réservoir 1 et son environnement lors du remplissage du réservoir 1.

Les propriétés physiques du gaz (ex : hydrogène) à la sortie de l'injecteur 2 ou juste en amont de celui-ci sont supposées connues (pression P et température T en temps réel). Ceci permet de connaître l'enthalpie h du gaz à cet endroit.

Comme détaillé ci-après, le modèle utilise de préférence des hypothèses simplificatrices pour réduire le temps de calcul tout en conservant une bonne approximation des phénomènes considérés.

De plus, pour répondre à l'interopérabilité souhaitée des stations, la détermination de l'intensité de chacun des phénomènes doit être reliée à des paramètres caractéristiques des réservoirs à remplir et communiqués à la station grâce à la communication standardisée selon le standard SAE. Ainsi, les dimensions géométriques du réservoir 1 sont supposées connues (longueur, diamètre, surface(s)...).

Selon une caractéristique avantageuse, le modèle s'appuie sur une corrélation de Nusselt pour déterminer l'évolution de la température dans le réservoir. Cette corrélation de Nusselt est exprimée au travers de deux nombres adimensionnés : le nombre de Reynolds relatif à la convection forcée interne et le nombre de Rayleigh relatif à la convection naturelle interne. Selon une particularité particulièrement avantageuse ces deux nombres adimensionnés sont exprimés selon une expression faisant intervenir la géométrie du réservoir, en particulier les rapports $L_{int}$/Dint et Dint/di.

Lint étant la longueur interne du réservoir en mètre, Dint le diamètre interne du réservoir et di le diamètre de l'injecteur di en mètre (connu).

Ce procédé permet de remplir efficacement et rapidement n'importe quel véhicule hydrogène sans mesurer la température du gaz dans le réservoir.

De préférence, le modèle d'estimation de la température du gaz dans le réservoir 1 est un modèle mathématique dit à « zéro dimension » (« 0D »).

Un tel modèle considère que le gaz (hydrogène dans notre exemple) entrant dans le réservoir 1 est immédiatement et parfaitement mélangé avec le gaz présent. De plus, la température T(t) de l'hydrogène dans le réservoir 1 est considérée homogène en tout point. Ainsi, et comme accepté par les normes ou projets de normes actuelles, la température T(t) du gaz dans le réservoir (1), qu'elle soit estimée ou mesurée, est considérée comme une température moyenne du gaz dans le réservoir 1.

De plus, la température du gaz T(0) dans le réservoir 1 avant remplissage est approximée à la température ambiante Tamb car le réservoir 1 est supposé à l'équilibre thermodynamique avant le remplissage.

Le procédé d'estimation de la température T(t) est modélisé selon un compromis entre sa précision et sa complexité (cette dernière conditionnant sa vitesse de calcul).

Les principaux phénomènes physiques intervenant lors du remplissage sont : la compression et l'injection de gaz dans le réservoir 1, la convection interne entre le gaz et la paroi 3 du réservoir 1, la convection externe entre la paroi 3 du réservoir 1 et l'air ambiant et le rayonnement de la paroi 3 externe du réservoir 1 vers l'atmosphère.

Ce modèle peut être décomposé en deux sous-systèmes : 1) le gaz (hydrogène) et 2) la paroi du réservoir (liner + composite lorsqu'il s'agit d'un réservoir composite).

Ainsi, le gaz va échanger de la chaleur avec la paroi 3 du réservoir 1 qui elle-même va interagir avec le milieu extérieur. Chaque sous-système est donc caractérisé avec ses propres variables de température, pression et masse. Ces sous-systèmes interagissent entre eux et échangent mutuellement de la chaleur afin de trouver un équilibre.

De plus, lors du remplissage, le gaz injecté dans le réservoir 1 depuis la source 4 a sa propre enthalpie he.

La quantité de chaleur échangée est liée à la surface d'échange. Par conséquent, il est primordial de connaître les dimensions caractéristiques du réservoir 1 que sont le diamètre interne Dint et la longueur interne Lint. La convection forcée liée au mouvement engendré par le débit de gaz entrant dans le réservoir sera caractérisée à partir du diamètre d'injection di de l'injecteur 2 au niveau du col du réservoir (au niveau de l'orifice).

Pour déterminer la température T du gaz dans le réservoir 1, il faut considérer les effets prépondérants se produisant au sein du système considéré pendant la phase de remplissage et ayant un impact sur cette température. Les phénomènes considérés sont

- l'admission du gaz, c'est-à-dire l'état thermodynamique de gaz injecté dans le réservoir 1 (qui diffère de celui présent initialement),
- la compression du gaz dans le réservoir 1 (pour l'hydrogène, le gaz se réchauffe en se comprimant),
- la convection interne (seule la paroi 3 limite l'échange entre l'intérieur et l'extérieur du réservoir 1 et donc la convection interne permet à la chaleur d'être évacuée vers l'extérieur),
- la convection externe (entre l'extérieur et le réservoir 1),

- le rayonnement entre la paroi 3 extérieure et l'air extérieur (échange de la chaleur par rayonnement avec l'atmosphère du fait de la différence entre la température Tw de la paroi 3 et la température extérieure ambiante Tamb).

Un phénomène prépondérant manque dans cette liste. Il s'agit de la conduction dans la paroi 3 du réservoir 1. Le paragraphe suivant donne l'explication et les hypothèses associées.

Selon une particularité avantageuse la paroi 3 composite d'un réservoir de type IV connu en soit (liner + renfort de fibres) est considérée homogène en ce qui concerne les échanges thermiques (paroi unique homogène dont les propriétés correspondent à la moyenne pondérée de chaque composant, la température dans l'épaisseur de la paroi 3 est modélisée par un gradient).

Tous les phénomènes physiques décrits précédemment peuvent être transcrits en équations mathématiques. Deux bilans d'énergie et une équation d'état peuvent permettre de déduire une expression de la température T(t) en fonction de données connues.

Comme illustré à la figure 2, les données (paramètres) d'entrée (connus) peuvent être :

- les données constantes que sont : les propriétés physiques de l'hydrogène (H2), la géométrie du réservoir (Dint, Lint,...), le diamètre di de l'injecteur et les propriétés physiques des parois 3,
- les conditions initiales (variables) que sont : la pression initiale du gaz dans le réservoir P(0), la température initiale du gaz dans le réservoir 1 T(0), la température initiale de la paroi du réservoir Tw(0) et la masse initiale de gaz dans le réservoir m(0),
- l'enthalpie du gaz entrant he(t) et la pression P(t) mesurée au plus proche du réservoir 1, par exemple au niveau du flexible 5.

Ces données sont connues, déterminées ou mesurées aisément.

A partir de ces données d'entrée le modèle peut calculer les données de sortie suivantes :

- la température T(t) du gaz dans le réservoir 1 à l'instant t,
- la masse m(t) du gaz dans le réservoir 1 à l'instant t,
- la température Tw(t) de la paroi du réservoir 1 à l'instant t.

Dans la variante de la figure 3 le dispositif dispose d'une mesure de débit du gaz entrant dans le réservoir 1. Dans ce cas, la masse m(t) du gaz injecté en temps réel dans le réservoir 1 est une donnée d'entrée et la pression P(t) du gaz dans le réservoir est une donnée de sortie (calculée).

Une première équation de bilan d'énergie peut faire le bilan enthalpique du gaz dans le réservoir 1. Trois termes ont un impact sur la variation d'enthalpie : le premier vient de la compression du gaz, le second représente la convection entre le gaz et la paroi interne du réservoir et le troisième terme provient de la quantité de gaz injecté dans le réservoir. On obtient

$$\frac{dh}{dt} = \frac{1}{\rho} \times \frac{dP}{dt} + \frac{k_g \times S_i}{m} \times (T_{wi} - T) + \frac{\dot{m}}{m} \times (h_e - h) \qquad \text{(équation 1)}$$

avec

m = la masse de gaz dans le réservoir (en kg)

dh/dt = la dérivée par rapport au temps de l'enthalpie massique du gaz dans le réservoir (en $J.kg^{-1}.s^{-1}$)

V= le volume du réservoir (en $m^3$)

dP/dt = la dérivée par rapport au temps de la pression du gaz dans le réservoir (en $Pa.s^{-1}$)

kg= le coefficient d'échange convectif entre le gaz et la paroi interne (en $W.m^{-2}.K^{-1}$)

Si= la surface interne de la paroi du réservoir (en $m^2$)

m = la masse du gaz dans le réservoir (en kg)

he = l'enthalpie massique du gaz entrant dans le réservoir (en $J.kg^{-1}$)

h = l'enthalpie massique du gaz dans le réservoir (en $J.kg^{-1}$)

$T_{wi}$ = température de la paroi interne du réservoir en contact direct avec le gaz =$(T+T_w)/2$. Cette température est supposée égale à la moyenne de la température T du gaz et de celle $T_w$ de la paroi (en K)

m = le débit de masse entrant dans le réservoir ($kg.s^{-1}$)

Pour calculer correctement la valeur de l'enthalpie massique la définition générale de l'enthalpie h d'un gaz réel est utilisée (cf. ci-dessous) :

$$dh = Cp \times dT + (1 - \beta\, T) \times \frac{dP}{\rho} \quad \text{(équation 2)}$$

avec

dh = la variation de l'enthalpie du fluide considéré (en J.kg$^{-1}$)
Cp= la capacité thermique massique à pression constante du fluide considéré (en J.kg$^{-1}$.K$^{-1}$)
dT = la variation de température du fluide considéré (en K)
$\beta$= le coefficient de compressibilité isochore du fluide considéré (en K$^{-1}$)
T= la température du fluide considéré en (en K)
dP= la variation de pression du fluide considéré (en Pa)
$\rho$ = la masse volumique du fluide considéré (en kg.m$^{-3}$)

En faisant intervenir la température du gaz T, la température Tw de la paroi et P la pression P du gaz dans le réservoir 1 on obtient (équation 3) :

$$m \times Cp \frac{dT}{dt} = V \times \beta \times T \times \frac{dP}{dt} + k_g \times S_i \times (T_{wi} - T) + \dot{m} \times (h_e - h)$$

La seconde équation définissant le bilan enthalpique appliqué à la paroi 3 du réservoir donne l'équation 4 suivante (les trois termes à droite de l'équation représentent respectivement la chaleur échangée avec la paroi par convection interne, par convection externe et par rayonnement).

$$m_w \times Cp_w \times \frac{dT_w}{dt} =$$
$$k_g \times S_i \times (T - T_{wi}) + k_a \times S_e \times (T_{amb} - T_{we}) + \varepsilon \times \sigma \times S_e \times (T_{amb}{}^4 - T_{we}{}^4)$$

avec

$k_g$ = le coefficient d'échange convectif entre la paroi externe et l'air embiant (en W.m$^{-2}$.K$^{-1}$)
$S_e$ = la surface externe de la paroi du réservoir (en m$^2$)
$\varepsilon$= l'émissivité de la paroi externe du réservoir (sans dimension)
$\sigma$ = la constante de Stéphan-Boltzmann (en W.m$^{-2}$.K$^{-4}$= 5,67.10$^{-8}$)
$T_{amb}$ = la température ambiante (en K)
$T_{we}$ = la température de la surface externe de la paroi du réservoir. Cettte température est égale à la moyenne de la température ambiante $T_{amb}$ et celle $T_w$ de la paroi $T_{we}$=($T_w$+$T_{amb}$)/2 (en K)
$T_{wi}$= la température de la surface interne de la paroi du réservoir (en K)
$S_i$ = la surface interne de la paroi du réservoir (en m$^2$)
$Cp_w$ = la capacité thermique massique de la paroi du réservoir (en J.kg$^{-1}$.K$^{-1}$)

La troisième équation est l'équation d'état appliquée au gaz dans le réservoir 1.

$$P.V = n.R.Z(P,\ T).T \qquad \text{(équation 5)}$$

n = quantité de matière dans le réservoir en mol
R = constante des gaz parfaits (=8.314 Pa.m$^3$.mol$^{-1}$.K$^{-1}$)
Z(P,T) est le facteur de compressibilité du gaz réel considéré (sans dimension), fonction de la pression P et de la température T. Cette fonction est connue et tabulée pour chaque gaz en fonction de la température et de la pression.

Cette formule est préférée à la loi des gaz parfaits pour une large plage de pressions.
Il est alors possible d'exprimer la pression P dans le réservoir comme une fonction de m (masse) et T (température) via l'équation 5.

$$P = \frac{R}{V \times M} \times Z(T,P) \times m \times T$$

Les équations 3, 4 et 5 permettent de déterminer les trois inconnues (P, T, Tw).

Ceci peut être obtenu par discrétisation pour réaliser un calcul pas à pas (par exemple avec le logiciel Matlab®). Le schéma numérique choisi peut être un schéma du type « temps explicite d'Euler ». Il n'y a pas de discrétisation de l'espace si le modèle est du type à zéro dimension (0D).

Les paramètres thermodynamiques Cp, β, h, Z peuvent être calculés précisément via l'interpolation des grilles de données du NIST connaissant la pression et la température (P et T). Le NIST est l'abréviation du « National Institute of Standards and Technology ».

Dans les équations qui suivent, les indices t et t-1 correspondent respectivement à l'instant présent t et l'instant précédent t-1. Les dérivées sont remplacées par des variations entre deux instants consécutifs.

L'approximation suivante est utilisée : la valeur de la capacité thermique massique du gaz est calculée à (t-1) à la place de l'instant (t). En effet, ne connaissant pas encore la température T(t) il n'est pas possible de lire dans les tables la valeur de Cp(t). Ceci peut être fait car la capacité thermique massique varie peu entre deux instants proches.

$$P(t)=(R/V.M).Z(T(t),P(t)).m(t).T(t)$$

approximé à

$$P(t)=(R/V.M).Z(T(t-1),P(t-1)).m(t).T(t) \qquad \text{(équation 6)}$$

En discrétisant l'équation 3 et en isolant T(t) via l'équation 6, il est possible d'exprimer T(t) sous la forme suivante (équation 7) :

$$T_t = T_{t-1} \times \frac{1 - \dfrac{m_{t-1}}{m_t} \times A_{t-1}}{1 - A_{t-1}} +$$

$$\frac{\Delta t \times k_{g_{t-1}} \times S_i \times (T_{w t-1} - T_{t-1}) + (m_t - m_{t-1}) \times (h_{e t-1} - h_{t-1})}{m_t \times Cp_{t-1} \times (1 - A_{t-1})}$$

Avec $A_{t-1} = \dfrac{\beta_{t-1} \times T_{t-1} \times R \times Z(T_{t-1}, P_{t-1})}{Cp_{t-1} \times M}$ et $A_t = \dfrac{\beta_t \times T_t \times R \times Z(T,P)}{Cp_t \times M}$

Cette équation est l'expression de la température T(t) du gaz à l'instant t discrétisée pouvant être implémentée dans un algorithme du « capteur logiciel ».

De la même manière, il est possible de discrétiser la dernière inconnue, à savoir la température de paroi $T_w(t)$ issue de l'équation 4 :

$$T_w(t) = T_w(t-1) + \frac{\Delta t}{m_w Cp_w} \left[ \begin{array}{l} k_g(t-1)\, S_i\, \left(T(t-1) - T_{wi}(t-1)\right) + k_a(t-1)\, S_e\, \left(T_{amb}(t-1) - T_{we}(t-1)\right) \\ + \varepsilon\, \sigma\, S_e\, \left(T_{amb}^4(t-1) - T_{we}^4(t-1)\right) \end{array} \right]$$

(équation 8)

avec

$m_w$ = la masse de la paroi en kg

$Cp_w$ = la capacité thermique massique de la paroi (modélisée) en $J.kg^{-1}.K^{-1}$

$k_g$(t-1)= le coefficient d'échange convectif à l'instant t-1 entre le gaz et la paroi interne en $W.M^{-2}K^{-1}$

$k_a$(t-1)= le coefficient d'échange convectif à l'instant t-1 entre la paroi externe et l'air ambiant en $W.m^{-2}\cdot K^{-1}$

$S_i$ = la surface interne du réservoir en $m^2$

$S_e$ la surface de la paroi externe du réservoir en $m^2$

$T_{wi}$(t-1) la température de la paroi du réservoir en surface interne à l'instant (t-1) en K

$T_{we}$(t-1) la température de la paroi du réservoir en surface externe à l'instant (t-1) en K

et $\varepsilon$ l'émissivité du réservoir (sans dimension) et $\sigma$ la constante de Boltzmann en $W.m^{-2}.k^{-4}= 5,67.10^{-8}$

Les équations 6, 7 8 permettent de calculer les trois inconnus T(t), $T_w$(t) et P(t) (ou m(t)) par calcul itératif.

L'expression des coefficients d'échange $k_a$ et $k_g$ sont détaillés ci-après.

Les coefficients d'échange de chaleur déterminent le profil de montée en température lors du remplissage sont exprimés via des nombres adimensionnés. Lorsque le fluide est en écoulement forcé (cas du remplissage), l'écriture sous forme universelle des corrélations de convection fait intervenir trois groupements adimensionnels : le nombre de Nusselt (Nu=($k_g$.Lc)/ $\lambda$), le nombre de Prandtl Pr=($\mu$.Cp)/ $\lambda$) et le nombre de Reynolds Re= V.Lc/v avec :

Nu le nombre de Nusselt (sans dimension), Pr le nombre de Prandtl (sans dimension), Re le nombre de Reynolds (sans dimension), Lc la longueur caractéristique du réservoir (en m), $\lambda$ la conductivité thermique du gaz en $W.m^{-1}.K^{-1}$ , v la viscosité cinématique du gaz en $m^2.s^{-1}$.et $\mu$ la viscosité dynamique du gaz en $kg.m^{-1}.s^{-1}$

Lors des phases où le débit de masse entrant dans le réservoir est nul (pré-remplissage hors pulse de pression, lors d'un changement de buffer etc...) la convection n'est plus mixte (forcée + naturelle) mais seulement naturelle dans le réservoir. Dans ce cas, le groupement qui gouverne la convection naturelle est le nombre de Grashof (Gr) mais les corrélations couramment admises font intervenir le nombre de Rayleigh (Ra).

En appliquant ces nombres adimensionnés à notre système thermodynamique, nous pouvons alors écrire avec les indices correspondants que la convection interne au réservoir kg et la convection externe ka s'écrivent :

$$k_g= (\lambda gaz/Lc).Nuint \text{ et } k_a= (\lambda air/Lc).Nuext$$

Nuint= le nombre de Nusselt du gaz dans le réservoir, Nuext= le nombre de Nusselt de l'air à l'extérieur du réservoir.

La valeur du nombre de Nusselt dépend fortement des grandeurs de référence choisies et de la signification physique qu'on entend lui donner. Dans notre cas nous définissons les longueurs caractéristiques Lc= Dint (diamètre intérieur du réservoir) pour $k_g$ et Lc=Dext (diamètre extérieur du réservoir) pour $k_a$.

Le nombre du Nusselt définit le ratio de chaleur transmise par conduction et convection à la limite d'une paroi et d'un fluide. La conductivité thermique $\lambda$ est une propriété du gaz évoluant avec la pression P et la température T et peut être précisément calculée par exemple par interpolation des données du NIST.

Selon une particularité avantageuse le nombre de Nusselt du gaz est corrélé à la fois le nombre de Rayleigh (Ra) et avec le nombre de Reynolds (Re) selon la formule :

Nuint= $a.Radint^b$ + $c.Red^d$ dans laquelle a est un coefficient sans dimension fonction du rapport (Lint/Dint) entre la longueur interne du réservoir Lint en mètre et le diamètre interne du réservoir Dint en mètre, c étant un coefficient sans dimension fonction du rapport (Dint/di) entre le diamètre interne du réservoir Dint en mètre et le diamètre de l'injecteur di en mètre, a, b, c et d étant des nombres réels positifs sans dimension, a étant compris entre 0 et 0,2, b étant compris entre 0,2 et 0,5, c étant compris entre 0 et 0.3 et d étant compris entre 0.5 et 0.9.

Cette expression a été validée par expérimentation (comparaison de la température T(t) estimée par le capteur logiciel à des mesures physiques réalisées sur des réservoirs instrumentés de capteurs de pression et température).

Les inventeurs ont constaté que cette expression donne des résultats très satisfaisants pour les réservoirs de type IV dont le ratio Lint/Dint est compris entre 1,5 et 7 et de préférence 1,8 et 6,6 et avec un ratio Dint/di compris entre 30 et 80 et de préférence entre 35,0 et 72,3.

Les inventeurs ont observé que le nombre de Reynolds et ses coefficients associés (c et d) permettent d'ajuster la température maximale atteinte par le gaz lors d'un remplissage. De son côté, le nombre de Rayleigh et les coefficients associés (a et b) déterminent le profil d'évolution de température du gaz, en particulier en dehors de la phase de remplissage bien que les deux actions soient combinées lors du remplissage.

L'estimation est particulièrement fidèle dans le cas où le coefficient a sans dimension fonction du rapport (Lint/Dint) est donné par la formule :

a= a1 * exp(a2*(Lint/Dint)) dans laquelle « exp » signifie la fonction exponentielle, avec a1 compris entre 0 et 0,04 et a2 compris entre 0,1 et 0,3 et

le coefficient c sans dimension fonction du rapport (Dint/di) est donné par la formule : c = c1 * exp(c2 * (Dint/d)) dans laquelle « exp » signifie la fonction exponentielle, c1 étant compris entre 0 et 0,05 et c2 étant compris entre 0,5 et 3

Le nombre de Reynolds (Red) (sans dimension) relatif à la convection forcée dans le réservoir 1 est compris de préférence entre $5{,}6{.}10^4$ et $2{,}0{.}10^6$. de plus, le nombre de Rayleigh (Radint) (sans dimension) relatif à la convection naturelle interne dans le réservoir (1) est compris de préférence entre $8{,}0{.}10^8$ et $1{,}0{.}10^{12}$.

L'efficacité de ce modèle a été validée à partir de quatre campagnes d'essais combinant des bancs de tests ou de réelles stations de remplissage et six réservoirs.

L'erreur relative sur la température maximale atteinte à la fin du remplissage est inférieure à 3%. Cela se traduit par un écart moyen par rapport à la température mesurée d'environ 8K (l'écart type étant de 3,45K).

Grâce à ces résultats, le procédé permet de calculer la masse de gaz (t) à chaque instant dans le réservoir 1 et donc la masse transférée depuis le début du remplissage. En effet, connaissant la pression, le volume et ayant une estimation de la température, la loi des gaz réels permet de déduire la quantité de matière et donc la masse connaissant la masse molaire de l'hydrogène.

Selon le procédé, l'estimation de température au cours du remplissage peut être utilisée avantageusement dans les stations de remplissages qui n'utilisent pas de communication dynamique avec le véhicule (la pression et la température dans le réservoir du véhicule connecté ne sont pas communiquées à la station).

## Revendications

1. Procédé de remplissage d'un réservoir (1) composite de type IV délimité par une paroi de forme générale cylindrique et de dimension connues avec un gaz carburant sous pression, notamment de l'hydrogène gazeux, le gaz étant injecté dans le réservoir (1) via un injecteur (2) de diamètre (di) connu, dans lequel la température T(t) moyenne du gaz dans le réservoir (1) est estimée en temps réel en fonction du temps t au cours du remplissage, le procédé comprenant, avant le remplissage, une étape de détermination de la température initiale T(0) du gaz dans le réservoir (1), une étape de détermination de la pression initiale P(0) du gaz dans le réservoir (1), une étape de détermination de la température moyenne initiale de la paroi du réservoir $T_w(0)$ et une étape de détermination de la masse de gaz initiale dans le réservoir m(0), le procédé comprenant, au cours du remplissage, une étape de détermination de l'enthalpie $h_e(t)$ du gaz entrant dans le réservoir (1) en fonction du temps et une étape de détermination de la masse de gaz m(t) introduite dans le réservoir en fonction du temps ou, respectivement, une étape de détermination de la pression P(t) dans le réservoir (1) en fonction du temps, le procédé comprenant une étape de détermination de la température moyenne du gaz T(t) à l'instant t dans le réservoir (1) en degré K, cette température moyenne T(t) étant exprimée comme une fonction du premier degré de la température moyenne du gaz T(t-1) à l'instant précédent (t-1) et d'un coefficient d'échange chaleur $k_g(t-1)$ convectif entre le gaz et la paroi interne du réservoir (1) à l'instant (t-1) en $W.m^{-2}\ K^{-1}$, dans lequel le coefficient d'échange chaleur $k_g(t-1)$ est donné par la relation $k_g = (\lambda g / Dint){.}Nuint$ dans laquelle $\lambda g$ est la conductivité thermique du gaz dans le réservoir en $W.m^{-1}.K^{-1}$, Dint est le diamètre interne du réservoir (1) en mètre et Nuint le nombre de Nusselt du gaz dans le réservoir (1) (sans dimension), et dans lequel le nombre de Nusselt du gaz est exprimé en fonction du nombre de Reynolds (Red) (sans dimension) relatif à la convection forcée dans le réservoir (1) et du nombre de Rayleigh (Radint) (sans dimension) relatif à la convection naturelle interne dans le réservoir (1) selon une formule $Nuint = a{.}Radint^b + c{.}Red^d$ dans laquelle a est un coefficient sans dimension fonction du rapport (Lint/Dint) entre la longueur interne du réservoir Lint en mètre et le diamètre interne du réservoir Dint en mètre, c étant un coefficient sans dimension fonction du rapport (Dint/di) entre le diamètre interne du réservoir Dint en mètre et le diamètre de l'injecteur di en mètre, a, b, c et d étant des nombres réels positifs sans dimension, a étant compris entre 0 et 0,2, b étant compris entre 0,2 et 0,5, c étant compris entre 0 et 0,3 et d étant compris entre 0.5 et 0.9.

2. Procédé selon la revendication 1, **caractérisé en ce que** le coefficient a sans dimension fonction du rapport (Lint/Dint) est donné par la formule :
   $a = a1 * exp(a2*(L_{int}/D_{int}))$ dans laquelle « exp » signifie la fonction exponentielle, avec a1 compris entre 0 et 0,04 et a2 compris entre 0,1 et 0,3.

3. Procédé selon la revendication 1 ou 2, **caractérisé en ce que** le coefficient c sans dimension fonction du rapport (Dint/di) est donné par la formule : $c = c1 * exp(c2 * (Dint/d))$ dans laquelle « exp » signifie la fonction exponentielle, c1 étant compris entre 0 et 0,05 et c2 étant compris entre 0,5 et 3.

4. Procédé selon l'une quelconque des revendications 1 à 3, **caractérisé en ce que** la paroi (3) du réservoir (1) composite comprend un liner plastique et une couche de matériau composite et est assimilée à une paroi homogène pour modéliser sa température $(T_w)$, c'est-à-dire que la capacité calorifique et la masse de la paroi sont les moyennes de celles des deux constituants de la paroi (3) que sont le liner et la couche de composite.

5. Procédé selon l'une quelconque des revendications 1 à 4, **caractérisé en ce que** la température moyenne du gaz T(t) est déterminée en temps réel par la résolution numérique de deux bilans enthalpiques : un premier bilan enthalpique appliqué au gaz injecté dans le réservoir (1) et un second bilan enthalpique appliqué à la paroi (3) du réservoir (1), en utilisant l'équation d'état des gaz réels appliquée au gaz dans le réservoir (1), les propriétés thermophysiques du gaz tel que le facteur de compressibilité Z, la capacité thermique massique cp et l'enthalpie massique h du gaz étant connues.

6. Procédé selon l'une quelconque des revendications 1 à 5, **caractérisé en ce que** la masse de gaz dans le réservoir (1) est déterminée en temps réel par la résolution numérique de deux bilans enthalpiques : un premier bilan enthalpique appliqué au gaz injecté dans le réservoir (1) et un second bilan enthalpique appliqué à la paroi (3) du réservoir (1), en utilisant l'équation d'état des gaz réels appliquée au gaz dans le réservoir (1), les propriétés thermophysiques du gaz tel que le facteur de compressibilité Z, la capacité thermique massique cp et l'enthalpie massique h du gaz étant connues.

7. Procédé selon l'une quelconque des revendications 1 à 5, **caractérisé en ce que** la pression moyenne du gaz P(t) dans le réservoir (1) est déterminée en temps réel par la résolution numérique de deux bilans enthalpiques : un premier bilan enthalpique appliqué au gaz injecté dans le réservoir (1) et un second bilan enthalpique appliqué à la paroi (3) du réservoir (1), en utilisant l'équation d'état des gaz réels appliquée au gaz dans le réservoir (1), les propriétés thermophysiques du gaz tel que le facteur de compressibilité Z, la capacité thermique massique $c_p$ et l'enthalpie massique h du gaz étant connues.

8. Procédé selon l'une quelconque des revendications 1 à 7, **caractérisé en ce que** la température moyenne de la paroi (3) du réservoir (1) Tw(t) est déterminée en temps réel par la résolution numérique de deux bilans enthalpiques : un premier bilan enthalpique appliqué au gaz injecté dans le réservoir (1) et un second bilan enthalpique appliqué à la paroi (3) du réservoir (1), en utilisant l'équation d'état des gaz réels appliquée au gaz dans le réservoir (1), les propriétés thermophysiques du gaz tel que le facteur de compressibilité Z, la capacité thermique massique Cp et l'enthalpie massique h du gaz étant connues.

9. Procédé selon l'une quelconque des revendications 1 à 8, **caractérisé en ce que** le réservoir (1) a un rapport (Lint/Dint) entre la longueur interne du réservoir Lint en mètre et le diamètre interne du réservoir Dint en mètre compris entre 1,5 et 7 et de préférence compris entre 1,8 et 6,6.

10. Procédé selon l'une quelconque des revendications 1 à 9, **caractérisé en ce que** le rapport (Dint/di) entre le diamètre interne du réservoir Dint en mètre et le diamètre di de l'injecteur (2) en mètre est compris entre 30 et 80 et de préférence compris entre 35,0 et 72,3.

11. Procédé selon l'une quelconque des revendications 1 à 10, **caractérisé en ce que** le nombre de Reynolds (Red) (sans dimension) relatif à la convection forcée dans le réservoir (1) est compris entre $5,6.10^4$ et $2,0.10^6$.

12. Procédé selon l'une quelconque des revendications 1 à 11, **caractérisé en ce que** le nombre de Rayleigh (Radint) (sans dimension) relatif à la convection naturelle interne dans le réservoir (1) est compris entre $8,0.10^8$ et $1,0.10^{12}$.


**Patentansprüche**

1. Verfahren zum Füllen eines Verbundwerkstoffbehälters (1) vom Typ IV, der durch eine Wand mit einer im Allgemeinen bekannten zylindrischen Form und Abmessung begrenzt ist, mit einem Brennstoffgas unter Druck, insbesondere gasförmigem Wasserstoff, wobei das Gas über einen Injektor (2) mit bekanntem Durchmesser (di) in den Behälter (1) eingespritzt wird, in dem die mittlere Gastemperatur T(t) im Behälter (1) in Echtzeit in Abhängigkeit von der Zeit t während des Füllens geschätzt wird, wobei das Verfahren vor dem Füllen einen Schritt des Bestimmens der Anfangstemperatur T(0) des Gases im Behälter (1), einen Schritt des Bestimmens des Anfangsdrucks P(0) des Gases im Behälter (1), einen Schritt des Bestimmens der mittleren Anfangstemperatur $T_w(0)$ der Behälterwand und einen Schritt des Bestimmens der Anfangsmasse m(0) des Gases im Behälter umfasst, wobei das Verfahren während des Füllens einen Schritt des Bestimmens der Enthalpie $h_e(t)$ des in den Behälter (1) eintretenden Gases in Abhängigkeit von der Zeit und einen Schritt des Bestimmens der Masse m(t) des in den Behälter eingeführten Gases in Abhängigkeit von der Zeit oder jeweils einen Schritt des Bestimmens des Drucks P(t) im Behälter (1) in Abhängigkeit von der Zeit umfasst, wobei das Verfahren einen Schritt des Bestimmens der mittleren Gastemperatur T(t) zum Zeitpunkt t im Behälter (1) in Grad K umfasst, wobei diese mittlere Temperatur T(t) als eine Funktion ersten Grades der mittleren Gastemperatur T(t-1) zum vorhergehenden Zeitpunkt (t-1) und eines Koeffizienten $k_g$(t-1) des konvektiven Wärmeaustausches zwischen dem Gas und der Innenwand des Behälters (1) zum Zeitpunkt (t-1) in $W \cdot m^{-2} \cdot K^{-1}$ ausgedrückt wird, wobei der Wärmeaustauschkoeffizient $k_g(t-1)$ durch die Beziehung $k_g = (\lambda g/Dint) \cdot Nuint$ gegeben ist, in der $\lambda g$ die thermische Leitfähigkeit des Gases im Behälter in $W \cdot m^{-1} \cdot K^{-1}$ ist, Dint der Innendurchmesser des Behälters (1) in Meter ist und Nuint die (dimensionslose) Nußelt-Zahl des Gases im Behälter (1) ist und wobei die Nußelt-Zahl des Gases als Funktion der (dimensionslosen) Reynolds-Zahl (Red), die sich auf die Zwangskonvektion im Behälter (1) bezieht, und die (dimensionslose) Rayleigh-Zahl (Radint), die sich auf die natürliche innere Konvektion im Behälter (1) bezieht, gemäß einer Formel $Nuint = a \cdot Radint^b + c.Red^d$ ausgedrückt wird, in der a ein dimensionsloser Koeffizient ist, der vom Verhältnis (Lint/Dint) zwischen der Innenlänge Lint des Behälters in Meter und dem Innendurchmesser Dint des Behälters in Meter abhängt, c ein dimensionsloser Koeffizient ist, der vom Verhältnis (Dint/di) zwischen dem Innendurchmesser Dint des Behälters in Meter und dem Durchmesser di des Injektors in Meter abhängt, wobei a, b, c und d dimensionslose positive reelle Zahlen sind, a zwischen 0 und 0,2 liegt, b zwischen 0,2 und 0,5 liegt, c zwischen 0 und 0,3 liegt und d zwischen 0,5 und 0,9 liegt.

2. Verfahren nach Anspruch 1, **dadurch gekennzeichnet, dass** der dimensionslose Koeffizient a, der vom Verhältnis (Lint/Dint) abhängt, durch die folgende Formel gegeben ist:
$a = a1 * exp(a2*(L_{int}/D_{int}))$, in der "exp" die Exponentialfunktion bedeutet, mit a1 zwischen 0 und 0,04 und a2 zwischen 0,1 und 0,3.

3. Verfahren nach Anspruch 1 oder 2, **dadurch gekennzeichnet, dass** der dimensionslose Koeffizient c, der vom Verhältnis (Dint/di) abhängt, durch die folgende Formel gegeben ist: $c = c1 * exp(c2 * (Dint/d))$, in der "exp" die Exponentialfunktion bedeutet, c1 zwischen 0 und 0,05 liegt und c2 zwischen 0,5 und 3 liegt.

4. Verfahren nach einem der Ansprüche 1 bis 3, **dadurch gekennzeichnet, dass** die Wand (3) des Verbundwerkstoffbehälters (1) einen Kunststoffliner und eine Schicht aus Verbundwerkstoff umfasst und mit einer homogenen Wand gleichgestellt wird, um ihre Temperatur (Tw) zu modellieren, das heißt, dass die Wärmekapazität und die Masse der Wand die Mittelwerte dieser beiden Bestandteile der Wand (3) sind, bei denen es sich um den Liner und um die Verbundschicht handelt.

5. Verfahren nach einem der Ansprüche 1 bis 4, **dadurch gekennzeichnet, dass** die mittlere Gastemperatur T(t) in Echtzeit durch die numerische Lösung von zwei Enthalpiebilanzen bestimmt wird: einer ersten Enthalpiebilanz, die auf Gas angewandt wird, das in den Behälter (1) injiziert wird, und einer zweiten Enthapiebilanz, die auf die Wand (3) des Behälters (1) angewendet wird, indem die Zustandsgleichung für reale Gase verwendet wird, die auf das Gas im Behälter (1) angewandt wird, wobei die thermophysikalischen Eigenschaften des Gases wie der Kompressibilitätsfaktor Z, die spezifische Wärmekapazität cp und die spezifische Enthalpie h des Gases bekannt sind.

6. Verfahren nach einem der Ansprüche 1 bis 5, **dadurch gekennzeichnet, dass** die Masse des Gases im Behälter (1) in Echtzeit durch die numerische Lösung von zwei Enthalpiebilanzen bestimmt wird: einer ersten Enthalpiebilanz, die auf Gas angewendet wird, das in den Behälter (1) injiziert wird, und einer zweiten Enthapiebilanz, die auf die Wand (3) des Behälters (1) angewendet wird, indem die Zustandsgleichung für reale Gase verwendet wird, die auf das Gas im Behälter (1) angewendet wird, wobei die thermophysikalischen Eigenschaften des Gases wie der Kompressibilitätsfaktor Z, die spezifische Wärmekapazität cp und die spezifische Enthalpie h des Gases bekannt sind.

7. Verfahren nach einem der Ansprüche 1 bis 5, **dadurch gekennzeichnet, dass** der mittlere Gasdruck P(t) im Behälter (1) in Echtzeit durch die numerische Lösung von zwei Enthalpiebilanzen bestimmt wird: einer ersten Enthalpiebilanz, die auf Gas angewendet wird, das in den Behälter (1) injiziert wird, und einer zweiten Enthapiebilanz, die auf die Wand (3) des Behälters (1) angewendet wird, indem die Zustandsgleichung für reale Gase verwendet wird, die auf das Gas im Behälter (1) angewendet wird, wobei die thermophysikalischen Eigenschaften des Gases wie der Kompressibilitätsfaktor Z, die spezifische Wärmekapazität Cp und die spezifische Enthalpie h des Gases bekannt sind.

8. Verfahren nach einem der Ansprüche 1 bis 7, **dadurch gekennzeichnet, dass** die mittlere Temperatur Tw(t) der Wand (3) des Behälters (1) in Echtzeit durch die numerische Lösung von zwei Enthalpiebilanzen bestimmt wird: einer ersten Enthalpiebilanz, die auf Gas angewendet wird, das in den Behälter (1) injiziert wird, und einer zweiten Enthapiebilanz, die auf die Wand (3) des Behälters (1) angewendet wird, indem die Zustandsgleichung für reale Gase verwendet wird, die auf das Gas im Behälter (1) angewendet wird, wobei die thermophysikalischen Eigenschaften des Gases wie der Kompressibilitätsfaktor Z, die spezifische Wärmekapazität Cp und die spezifische Enthalpie h des Gases bekannt sind.

9. Verfahren nach einem der Ansprüche 1 bis 8, **dadurch gekennzeichnet, dass** der Behälter (1) ein Verhältnis (Lint/Dint) zwischen der Innenlänge Lint des Behälters in Meter und dem Innendurchmesser Dint des Behälters in Meter zwischen 1,5 und 7 und vorzugsweise zwischen 1,8 und 6,6 aufweist.

10. Verfahren nach einem der Ansprüche 1 bis 9, **dadurch gekennzeichnet, dass** das Verhältnis (Dint/di) zwischen dem Innendurchmesser Dint des Behälters in Meter und dem Durchmesser di des Injektors (2) in Meter zwischen 30 und 80 und vorzugsweise zwischen 35,0 und 72,3 beträgt.

11. Verfahren nach einem der Ansprüche 1 bis 10, **dadurch gekennzeichnet, dass** die (dimensionslose) Reynolds-Zahl (Red), die sich auf die Zwangskonvektion im Behälter (1) bezieht, zwischen $5,6.10^4$ und $2,0.10^6$ beträgt.

12. Verfahren nach einem der Ansprüche 1 bis 11, **dadurch gekennzeichnet, dass** die (dimensionslose) Rayleigh-Zahl (Radint), die sich auf die natürliche Konvektion im Behälter (1) bezieht, zwischen $8,0\cdot10^8$ und $1,0\cdot10^{12}$ beträgt.

**Claims**

1. Method for filling a type IV composite tank (1), delimited by a wall of a generally-cylindrical shape and known dimensions, with pressurised combustible gas, in particular gaseous hydrogen, the gas being injected into the tank (1) through an injector (2) with a known diameter (di), wherein the average gas temperature T(t) inside the tank (1) is estimated in real time according to time t during the filling, the method comprising, before filling, a step of determining the initial temperature T(0) of the gas inside the tank (1), a step of determining the initial pressure P(0) of the gas inside the tank (1), a step of determining the initial average temperature of the tank wall $T_w(0)$, and a step determining the initial mass of gas inside the tank m(0), the method comprising, during filling, a step of determining the enthalpy $h_e(t)$ of the gas entering into the tank (1) according to time, and a step of determining the mass of the gas m(t) introduced into the tank according to time or, respectively, a step of determining the average pressure P(t) inside the tank (1) according to time, the method comprising a step of determining the average temperature of the gas T(t) at the moment t inside the tank (1) in degrees K, this average temperature T(t) being expressed as a first degree function of the average temperature of the gas T(t-1) at the preceding moment (t-1) and of a convective heat transfer coefficient $k_g(t-1)$ between the gas and the inner wall of the tank (1) at the moment (t-1) in $W.m^{-2}.K^{-1}$, wherein the heat transfer coefficient $k_g(t-1)$ is given by the relationship $k_g=(\lambda g/Dint).Nuint$ wherein $\lambda g$ is the thermal conductivity of the gas inside the tank in $W.m^{-1}.K^{-1}$, Dint is the inner diameter of the tank (1) in metres and Nuint is the Nusselt number of the gas inside the tank (1) (without dimension), and wherein the Nusselt number of the gas is expressed as a function of the Reynolds number (Red) (without dimension) relating to the forced convection inside the tank (1) and of the Rayleigh number (Radint) (without dimension) relating to the natural internal convection inside the tank (1) according to a formula $Nuint= a.Radint^b + c.Red^d$ wherein a is a coefficient without dimension according to the ratio (Lint/Dint) between the inner length of the tank Lint in metres and the inner diameter of the tank Dint in metres, c being the coefficient without dimension according to the ratio (Dint/di) between the inner diameter of the tank Dint in metres and the diameter of the injector di in metres, a, b, c and d being real positive numbers without dimension, a being between 0 and 0.2, b being between 0.2 and 0.5, c being between 0 and 0.3 and d being between 0.5 and 0.9.

2. Method according to claim 1, **characterised in that** the coefficient a without dimension as a function of the ratio (Lint/Dint) is determined with the following formula:
   $a= a1 * exp(a2*(L_{int}D_{int}))$ wherein "exp" means the exponential function, with a1 being between 0 and 0.04 and a2 being between 0.1 and 0.3.

3. Method according to claim 1 or 2, **characterised in that** the coefficient c without dimension as a function of the ratio (Dint/di) is determined with the following formula: $c = c1 * exp(c2 * (Dint/d))$ wherein "exp" means the exponential function, with c1 being between 0 and 0.05 and c2 being between 0.5 and 3.

4. Method according to any one of claims 1 to 3, **characterised in that** the wall (3) of the composite tank (1) comprises a plastic liner and a layer of composite material and is assimilated to a homogeneous wall to model the temperature ($T_w$) thereof, i.e. the heat capacity and the weight of the wall are the average values of the two components of the wall (3), which are the liner and the layer of composite material.

5. Method according to any one of claims 1 to 4, **characterised in that** the average temperature of the gas T(t) is determined in real time by the numerical resolution of two enthalpy balances: a first enthalpy balance applied to the gas injected into the tank (1) and a second enthalpy balance applied to the wall (3) of the tank (1), using the real gas state equation applied to the gas inside the tank (1), the thermophysical properties of the gas, such as the compressibility factor Z, the specific heat capacity cp and the specific enthalpy h of the gas being known.

6. Method according to any one of claims 1 to 5, **characterised in that** the mass of gas inside the tank(1) is determined in real time by the numerical resolution of two enthalpy balances: a first enthalpy balance applied to the gas injected into the tank (1) and a second enthalpy balance applied to the wall (3) of the tank (1), using the real gas state equation applied to the gas inside the tank (1), the thermophysical properties of the gas, such as the compressibility factor Z, the specific heat capacity cp and the specific enthalpy h of the gas being known.

7. Method according to any one of claims 1 to 5, **characterised in that** the average pressure of the gas P(t) inside the tank (1) is determined in real time by the numerical resolution of two enthalpy balances: a first enthalpy balance applied to the gas injected into the tank (1) and a second enthalpy balance applied to the wall (3) of the tank (1), using the real gas state equation applied to the gas inside the tank (1), the thermophysical properties of the gas, such as the compressibility factor Z, the specific heat capacity cp and the specific enthalpy h of the gas being known.

8. Method according to any one of claims 1 to 7, **characterised in that** the average temperature of the wall (3) of the tank (1) Tw(t) is determined in real time by the numerical resolution of two enthalpy balances: a first enthalpy balance applied to the gas injected into the tank (1) and a second enthalpy balance applied to the wall (3) of the tank(1), using the real gas state equation applied to the gas inside the tank(1), the thermophysical properties of the gas, such as the compressibility factor Z, the specific heat capacity Cp and the specific enthalpy h of the gas being known.

9. Method according to any one of claims 1 to 8, **characterised in that** the tank (1) has a ratio (Lint/Dint) between the inner length of the tank Lint in metres and the inner diameter of the tank Dint in metres between 1.5 and 7, and preferably between 1.8 and 6.6.

10. Method according to any one of claims 1 to 9, **characterised in that** the ratio (Lint/di) between the inner diameter of the tank Dint in metres and the diameter di of the injector (2) in metres is between 30 and 80, and preferably between 35.0 and 72.3.

11. Method according to any one of claims 1 to 10, **characterised in that** the Reynolds number (Red) (without dimension) relating to the forced convection inside the tank (1) is between $5.6*10^4$ and $2.0*10^6$.

12. Method according to any one of claims 1 to 11, **characterised in that** the Rayleigh number (Radint) (without dimension) relating to the natural convection inside the tank (1) is between $8.0*10^8$ and $1.0*10^{12}$.

FIG.1

FIG.2

FIG.3

## RÉFÉRENCES CITÉES DANS LA DESCRIPTION

**Documents brevets cités dans la description**

- WO 2011133296 A1